(19) Europäisches Patentamt

European Patent Office

Office européen des brevets

(11) Veröffentlichungsnummer: **0 498 926 B1**

(12) **EUROPÄISCHE PATENTSCHRIFT**

(45) Veröffentlichungstag der Patentschrift: **22.02.95**

(21) Anmeldenummer: **91117078.5**

(22) Anmeldetag: **08.10.91**

(51) Int. Cl.⁶: **F16F 13/00**, F16F 15/03, G05D 19/02

(54) **Hydraulisch bedämpftes Gummilager zur Abstützung eines Maschinenaggregats.**

(30) Priorität: **12.02.91 DE 4104168**

(43) Veröffentlichungstag der Anmeldung:
**19.08.92 Patentblatt 92/34**

(45) Bekanntmachung des Hinweises auf die Patenterteilung:
**22.02.95 Patentblatt 95/08**

(84) Benannte Vertragsstaaten:
**DE ES FR GB IT SE**

(56) Entgegenhaltungen:
**EP-A- 0 309 211        EP-A- 0 410 647
EP-A- 0 412 853        DE-A- 2 628 954
DE-C- 3 918 753        US-A- 4 811 835**

(73) Patentinhaber: **Firma Carl Freudenberg
Höhnerweg 2-4
D-69469 Weinheim (DE)**

(72) Erfinder: **Burger, Stefan
Sophienstrasse 4
W-6940 Weinheim (DE)**
Erfinder: **Freudenberg, Tillman, Dr.
Hügelstrasse 49
W-6940 Weinheim (DE)**
Erfinder: **Feurer, Georg
Bettenbach 23
W-6942 Mörlenbach (DE)**
Erfinder: **Freudenberg, Ulrich, Dr.
Büttemer Weg 26
W-6945 Hirschberg (DE)**
Erfinder: **Weltin, Uwe, Dr.
Jahnstrasse 24
W-6149 Rimbach (DE)**

**Beschreibung**

Die Erfindung betrifft ein hydraulisch bedämpftes Gummilager zur Abstützung eines in einer schwingenden Bewegung befindlichen Maschinenaggregats auf einem Träger, bei dem einem flüssigkeitsgefüllten Arbeitsraum ein mit einem elektromagnetischen Antrieb versehener Aktuator zugeordnet ist, wobei der Antrieb mit einer Kennfeldsteuerung versehen ist, die mit einem Signalgeber des Maschinenaggregats verbunden ist und einen Leistungsverstärker als Endstufe umfaßt.

Ein solches Gummilager ist aus der DE-PS 34 33 255 bekannt. Dabei ist es vorgesehen, den Aktuator in der Weise gesteuert zu betätigen, daß die bei vorher festgelegten Betriebszuständen von dem Maschinenaggregat verursachten Störschwingungen in ihrer Gesamtheit optimal kompensiert werden. Zur Erreichung dieses Zweckes wird der Aktuator mit Hilfe eines Kennfeldes angesteuert, in dem empirisch ermittelte, optimale Reaktionen in Abhängigkeit von einer den jeweiligen Betriebszustand charakterisierend beschreibenden Zustandsgröße des Maschinenaggregates abgespeichert sind. Eine solche Zustandsgröße bildet beispielsweise die Drehzahl. Im Kfz-Bereich lassen sich hierdurch Schwingungen in optimaler Weise isolieren, die bei einer bestimmten Drehzahl beispielsweise durch den jeweils eingelegten Gang sowie die Drosselklappenstellung und den Unterdruck im Ansaugrohr verursacht sind. Das sich während des praktischen Fahrbetriebes ergebende Spektrum von möglichen und tatsächlich auftretenden Störschwingungen wird hierdurch jedoch nur unzureichend abgedeckt. Auch ist eine Verwendung der mit großem Aufwand ermittelten und in dem Kennfeld abgelegten Steuerdaten nur so lange sinnvoll, wie sich keine Sekundärveränderung in dem System als solchem ergibt, beispielsweise eine Veränderung des Gewichts der abgestützten Masse und/oder eine alterungsbedingte Veränderung der Elastizität der in dem Gummilager enthaltenen Gummibestandteile sind nicht tolerierbar.

Aus der DE-PS 39 18 753 ist ein Gummilager mit hydraulischer Dämpfung bekannt, bei dem der Antrieb des Aktuators so gestaltet ist, daß sich akustisch wirksame Schwingungen bei sachgerechter Ansteuerung in einer besonders guten Weise unterdrücken lassen. Die hierzu erforderlichen steuerungstechnischen Mittel werden nicht erläutert.

Der Erfindung liegt die Aufgabe zugrunde, ein Gummilager der eingangs genannten Art derart weiterzuentwickeln, daß bei allen denkbaren Betriebsbedingungen eine deutlich verbesserte Isolierung der von dem Maschinenaggregat erregten, akustisch störenden Schwingungen in bezug auf den das Gummilager abstützenden Träger ergibt.

Diese Aufgabe wird erfindungsgemäß bei einem Gummilager der eingangs genannten Art mit den kennzeichnenden Merkmalen von Anspruch 1 gelöst. Auf eine vorteilhafte Ausführung nimmt Anspruch 2 und 3 Bezug. Anspruch 4 nimmt Bezug auf eine Ausführung, mit der Schwingungen isoliert werden können, die sich aus mehreren Harmonischen zusammensetzen.

Bei dem erfindungsgemäßen Gummilager ist es vorgesehen, daß dem ersten Signalgeber ein Signalgenerator nachgeschaltet ist, der zwei harmonische, in bezug aufeinander phasenverschobene erste Signale einer miteinander und mit den Schwingungen des Maschinenaggregates übereinstimmenden Frequenz erzeugt sowie ein zweites Signal, das die Frequenz in charakterisierender Weise wiedergibt, daß dieses zweite Signal Kennliniengliedern, deren funktionaler Zusammenhang zwischen Eingangs- und Ausgangssignal willkürlich festgelegt wird, zugeführt wird, daß die Ausgangssignale dieser Kennlinienglieder mit den ersten Signalen des Sinusgenerators multipliziert und die so erhaltenen, dritten Signale paarweise addiert werden, daß die so erhaltenen Signale jeweils mit einem vierten Signal eines Sensors, welches die Relativbewegungen des Trägers in charakteristischer Weise wiedergibt, multipliziert werden, daß die beiden so erhaltenen fünften Signale jeweils einem willkürlich festzulegenden Übertragungsglied zugeführt werden, das oberhalb einer willkürlich festlegbaren Frequenz ein Tiefpaßverhalten aufweist, daß die so erhaltenen sechsten Signale jeweils mit den Signalen des Signalgenerators multipliziert werden und daß die so erhaltenen siebten Signale zu einem achten Signal addiert werden, das in dem Leistungsverstärker verstärkt und zur Betätigung des Antriebes verwendet wird.

Bei dem erfindungsgemäßen Gummilager ist es somit vorgesehen, den elektromechanischen Antrieb des Aktuators, ähnlich wie bei der eingangs beschriebenen Ausführung anzusteuern, was im idealen Falle eine optimale Isolierung akustisch störender Schwingungen ermöglicht. Dazu werden in dem das Gummilager abstützenden Träger auftretende Restschwingungen erfaßt und zur kontinuierlichen Modifizierung des den Aktuator ansteuernden Signals verwendet, wodurch eine optimale Schwingungsisolierung auch dann gewährleistet ist, wenn weniger optimale, d.h. die normalerweise gegebenen Betriebsbedingungen vorliegen. Auch Veränderungen der Federeigenschaften des in dem Gummilager enthaltenen, gummielastischen Federkörpers als Folge von wechselnden Umgebungstemperaturen und/oder Alterungsvorgängen können ohne weiteres in Kauf genommen werden.

Als besonders vorteilhaft hat es sich erwiesen, wenn mindestens einem der Sensoren ein Analog-Digitalwandler nachgeschaltet und dem Leistungsverstärker ein Digital-Analogwandler vorgeschaltet ist. Hierdurch wird erreicht, daß die Ansteuerung des Aktuators bis zu einem sehr hohen Grad unter Verwendung von digitalen Steuerungsbauteilen realisierbar ist, wobei insbesondere der Einsatz von frei programmierbaren Bauteilen sinnvoll ist.

Prinzipiell lassen sich Sinusgenerator, Kennlinienglieder, Summationsglieder, Verzweigungspunkte, Multiplizierer, Übertragungsglied und Leistungsverstärker ganz oder teilweise durch digitale Bauteile realisieren. Welche Funktionen analog bzw. digital realisiert werden, ist frei wählbar.

Vorteilhaft ist in vielen Fällen eine digitale Realisierung der Kennlinienglieder, wobei auch komplizierte funktionale Zusammenhänge zwischen den die Frequenz der Schwingung des Aggregates charakterisierenden zweiten Signalen des Signalgenerators und den Ausgangssignalen der Kennlinienglieder realisiert werden können. Man kann solche Zusammenhänge z.B. abschnittsweise für jeweils bestimmte Frequenzbereiche als konstant festlegen und dabei in Form einer Tabelle speichern.

Neben Kostengründen spricht auch die flexible Anpassungsmöglichkeit der Steuerung an verschiedene Motorlagerungen und Betriebsbedingungen für eine solche digitale Realisierung. Beachtet werden müssen dann die Grundregeln der digitalen Signalverarbeitung, insbesondere das Shannon-Theorem.

Unter Umständen ist es auch notwendig, den AD-Wandlern analoge Tiefpaßfilter vorzuschalten, um Aliasing-Effekte zu vermeiden und dem DA-Wandler ein analoges Tiefpaßfilter nachzuschalten, um den treppenförmigen Verlauf des ausgegebenen Signals zu glätten und das so geglättete Signal dem Leistungsverstärker zuzuführen. Diese zusätzlichen Filter müssen ggf. in den mit Hilfe der Kennlinienglieder realisierten Funktionen berücksichtigt werden.

Es ist vorgesehen, daß die Phasenverschiebung zwischen den beiden vom Signalgenerator erzeugten ersten Signalen ebenfalls abhängig von den vom Signalgenerator erzeugten, die Schwingungsfrequenz des Maschinenaggregates charakterisierenden zweiten Signal bestimmt wird. Dies läßt sich beispielsweise unter Verwendung von Totzeitgliedern, analogen oder digitalen Filtern, Schieberegistern usw. erreichen.

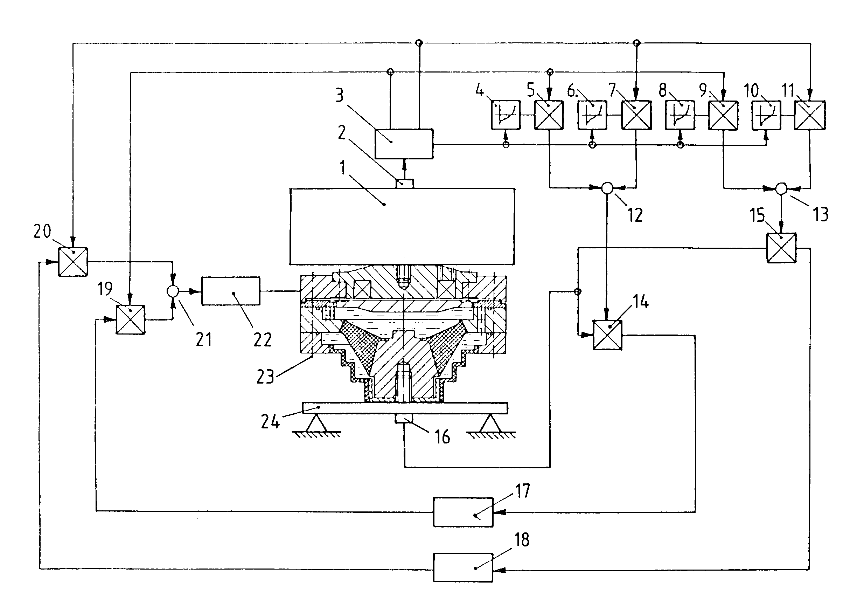

Die Erfindung wird nachfolgend anhand der Zeichnung weiter verdeutlicht. Diese nimmt Bezug auf die Abstützung einer Verbrennungskraftmaschine in einem Kraftfahrzeug und gibt sowohl das Gummilager als auch die zugehörige Schaltung in schematischer Darstellung wieder. Von wesentlicher Bedeutung ist es in bezug auf die vorstehend angesprochene Verwendung, daß das Gummilager auf einem Träger abgestützt ist, der beispielsweise durch ein Karosserieteil gebildet sein kann und eine gewisse Nachgiebigkeit und Dämpfung aufweist.

Bei der abgestützten Verbrennungskraftmaschine handelt es sich um einen üblichen Hubkolbenmotor, bei dem eine hin- und hergehende Bewegung von Kolben in die Drehbewegung einer Kurbelwelle umgesetzt wird. Unter normalen Betriebsbedingungen werden hierdurch Schwingungen erregt, die sich im Inneren eines Kraftfahrzeuges störend bemerkbar machen können. Es ist deshalb erwünscht, derartige Schwingungen von der Karosserie zu isolieren, was mit Hilfe des vorgeschlagenen Gummilagers in bisher noch nicht erreichter Weise gelingt, wobei auch bei schnellen Drehzahländerungen eine sehr gute Schwingungsisolation erreicht wird.

Das eigentliche Gummilager kann hinsichtlich seines technischen Aufbaus der Ausführung nach der deutschen Patentschrift 39 18 753 entsprechen, ohne hierauf beschränkt zu sein. Der darin enthaltene Aktuator ist mit einem elektromagnetischen Antrieb versehen, was es ermöglicht, die bei einer Einleitung von Schwingungen in das Oberteil des Gummilagers in dem flüssigkeitsgefüllten Arbeitsraum erregten Druckänderungen so zu kompensieren, daß eine Übertragung auf den Träger ausgeschlossen ist. Hierzu dient die nachfolgend beschriebene Schaltung.

Das erfindungsgemäße Gummilager wird mittels eines Verfahrens geregelt, das sich durch eine sehr geringe Anzahl der Rechenoperationen auszeichnet. Damit kann es bei digitaler Ausführung unter Verwendung eines Microcontrollers realisiert werden. Bei dieser Realisierung der Regelung des Gummilagers ist der erforderliche Speicherbedarf gering. Gespeichert werden müssen nur die in einem Vorversuch ermittelten, funktionalen Zusammenhänge, die im Regelungsverfahren mit Hilfe der Kennlinienglieder realisiert werden.

Das zur Anwendung gelangende Verfahren zur Regelung des Gummilagers ist für sehr große Frequenzbereiche geeignet. Es zeichnet sich in regelungstechnischer Hinsicht durch eine besonders große Robustheit aus. Damit ist gewährleistet, daß auch Veränderungen des dynamischen Verhaltens von Leistungsverstärker, Gummilager, Träger und Sensor in weiten Bereichen toleriert werden können. Darüber hinaus ist das zur Anwendung gelangende Regelungsverfahren des Gummilagers insbesondere auch für schnelle Frequenzänderungen der zu isolierenden Schwingungen geeignet, beispielsweise für Frequenzänderungen, die durch Drehzahländerungen eines Aggregates verursacht sind. Dadurch kann das Gummilager auch bei der Abstützung der Verbrennungskraftmaschine eines Personenkraftfahrzeuges wirksam eingesetzt werden.

3

Aufbau und Funktion des Gummilagers:

Das vorgeschlagene Gummilager ermöglicht die Isolierung harmonischer Schwingungen, wie sie z.B. von einem unwuchterregten Aggregat ausgehen. Die Frequenz harmonischer Unwuchtschwingungen steht in einem konstanten Verhältnis zur Drehzahl eines rotierenden Bauteiles und ist damit exakt bestimmbar. Die Aufgabe besteht darin, ein Signal zu erzeugen, dessen Frequenz mit der Frequenz der harmonischen Unwuchterregung übereinstimmt.

Dieses Signal muß in Betrag und Phase so gestaltet sein, daß damit, falls man dieses Signal über einen Leistungsverstärker dem Aktuator des oben erwähnten Gummilagers zuführt, die gewünschte Schwingungsisolation erreicht wird.

Ein interessantes Anwendungsgebiet ist die Steuerung der elastischen Lagerung von Hubkolbenmaschinen in Kraftfahrzeugen. Bei Reihenvierzylindermotoren treten beispielsweise Schwingungen auf, deren Frequenz der doppelten Motordrehzahl entspricht. Das vorgeschlagene Gummilager eignet sich hervorragend zur Isolation von solchen Schwingungen. Werden diese Schwingungen hingegen in die Karosserie eingeleitet, so führt dies zu ausgeprägten Brummerscheinungen im Fahrgastraum. Der Einsatz des erfindungsgemäßen Gummilagers führt somit zu einer deutlichen Komfortsteigerung.

Der Signalgeber 2 liefert ein periodisches Zeitsignal, dessen Periodendauer in einem festen Verhältnis zur Periodendauer der zu isolierenden Schwingung steht.

Ein solcher Signalgeber kann beispielsweise die Bewegung des Aggregates 1 auswerten, wobei u.U. störende Signalanteile herausgefiltert werden müssen.

Eine andere Möglichkeit besteht darin, einen Sensor, der eine konstante Anzahl von Impulsen pro Umdrehung eines rotierenden Bauteiles abgibt, zu verwenden. Ein Beispiel dafür ist ein sogenannter OT-Sensor. Dieser Sensor signalisiert, wann sich ein bestimmter Kolben einer Hubkolbenmaschine im oberen Totpunkt befindet. Man erhält also genau einen Impuls pro Kurbelwellenumdrehung.

Der Signalgenerator 3 erhält das Zeitsignal des Signalgebers 2 und generiert daraus zwei harmonische Schwingungen unterschiedlicher Phasenlage, wobei die Phasendifferenz zwischen diesen beiden harmonischen Schwingungen auch frequenzabhängig gesteuert sein kann. Die Frequenz dieser harmonischen Schwingungen ist identisch mit der Frequenz der zu isolierenden Schwingung.

Die Ausgangssignale des Sinusgenerators werden im folgenden mit

$$u_1(t) = \sin(wt)$$
$$u_2(t) = \sin(wt + phi(w))$$

bezeichnet. Dabei ist w die Kreisfrequenz der zu isolierenden Schwingung.

Folgende Spezialfälle sind denkbar:

$$phi(w) = konst = 90°$$

damit gilt:

$$u_1(t) = \sin(wt)$$
$$u_2(t) = \sin(wt + 90°) = \cos(wt)$$

oder

$$u_1(t) = \sin(wt)$$
$$u_2(t) = \sin(wt - wT) = \sin(w(t-T)) = u_1(t-T)$$

wobei der frequenzabhängige Phasenwinkel mit

$$phi(w) = -w^*T$$

gebildet wird, wobei T eine geeignete Totzeit ist.

Man erhält $u_2$, indem man $u_1$ um T zeitlich verzögert. Dies kann beispielsweise bei einer digitalen Realisierung sinnvoll sein. Stellt T ein ganzzahliges Vielfaches des Abtastzeitintervalles dar, so läßt sich die zeitliche Verschiebung von $u_1$ sehr einfach unter Verwendung eines Schieberegisters realisieren. Diese Möglichkeit kann insbesondere dann angebracht sein, wenn der Betriebsdrehzahlbereich des Aggregates begrenzt ist.

Für die Ausführung der Regelung des Gummilagers ist es notwendig, daß phi(w) kein ganzzahliges Vielfaches von 180° sein darf und von Null verschieden ist.

Zusätzlich wird vom Signalgenerator 3 ein Signal generiert, das die Frequenz der Unwucht des unwuchterregten Aggregates charakterisiert. Ein solches Signal kann beispielsweise direkt proportional zur Frequenz oder Periodendauer der entsprechenden Schwingung sein.

Die notwendigen zugehörigen Bestandteile eines solchen Signalgenerators können

- PLL-Schaltungen
- Trackingfilter
- digitale Oszillatoren

sein.

Das Ausgangssignal $u_1(t)$ des Signalgenerators 3 wird mit dem Ausgangssignal $r_1(t)$ des Übertragungsgliedes 17 unter Verwendung eines Multiplizierers 19 gebildet; das Ausgangssignal $u_2(t)$ des Signalgenerators 3 wird mit dem Ausgangssignal $r_2(t)$ des Übertragungsgliedes 18 unter Verwendung des Multiplizierers 20 gebildet. Man erhält so die Signale

$$v_1(t) = r_1(t) \cdot u_1(t) = r_1(t) \cdot \sin(wt),$$
$$v_2(t) = r_2(t) \cdot u_2(t) = r_2(t) \cdot \sin(wt + phi(w)),$$

d.h. man führt eine lineare Amplitudenmodulation durch, wobei w die Kreisfrequenz der Unwuchterregung bzw. die Frequenz der Schwingungen des Trägers 24 darstellt.

Die Signale $v_1$ und $v_2$ werden unter Benutzung eines Addierers 21 summiert und dem Leistungsverstärker 22 zugeführt. Dieser steuert das Gummilager 23 an und verursacht damit eine Bewegung des Trägers 24. Diese vom Gummilager 23 verursachte Bewegung wird der von der Unwucht des Aggregates 1 verursachten Bewegung überlagert. Die Gesamtbewegung wird vom Signalgeber 16 erfaßt. Im folgenden wird angenommen, daß Leistungsverstärker 22, Gummilager 23, Träger 16 und der Signalgeber 2 lineares Verhalten aufweisen. Im folgenden werden diese miteinander verbundenen Glieder als Teilsystem bezeichnet.

Für das lineare Teilsystem gilt im eingeschwungenen Zustand, daß das harmonische Eingangssignal des Leistungsverstärkers 22

$$x(t) = r_1(t) \sin(wt) + r_2(t) \sin(wt + phi(w))$$

am Ausgang des Sensors 16 das harmonische Ausgangssignal

$$g(t) = r_1(t) \, abs(G(jw)) \sin(wt + arg(G(jw)))$$
$$+ r_2(t) \, abs(G(jw) \sin(wt + phi(w) + arg(G(jw)))$$

jedoch mit veränderter Amplitude abs(G(jw)) und Phase arg(G(jw)) erzeugt. Dabei ist G(jw) die Stellübertragungsfunktion zwischen Verstärkereingang 22 und Sensorausgang 16 und $r_1(t)$ und $r_2(t)$ geeignet festzulegende Amplituden.

Weiterhin gilt, daß eine harmonische Bewegung des Aggregates 1 am Sensor 16 das harmonische Signal

$$z(t) = Z(t) \sin(wt + gamma(w))$$

erzeugt.

Die Amplitude Z(t) und die Phasenlage gamma(w) dieses Signales werden durch die Unwuchtkräfte des Aggregates 1 sowie vom dynamischen Verhalten des aktiv gelagerten Motors beeinflußt.

Vereinfachend wird im folgenden angenommen, daß nur periodische Signale auftreten. Damit läßt sich die durch das Sensorsignal s(t) charakterisierte Bewegung des Motorträgers zusammen mit der Auswirkung auf das Signal am Leistungsverstärkereingang x(t) gemäß

$$s(t) = r_1(t) \, abs(G(jw)) \sin(wt + arg(G(jw)))$$
$$+ r_2(t) \, abs(G(jw)) \sin(wt + phi(w) + arg(G(jw)))$$
$$+ Z(t) \sin(wt + gamma(w))$$

angeben.

Die Anpassung der Amplituden $r_1(t)$ und $r_2(t)$ soll nun so erfolgen, daß die Bewegung des Trägers 24, gekennzeichnet durch das Sensorsignal s(t) in kurzer Zeit minimiert wird. Damit dies gelingt, ist es bei dem hier vorgestellten Verfahren notwendig, die Stellübertragungsfunktion des Teilsystems in einem Vorversuch zu ermitteln.

Die gemessene Übertragungsfunktion Gm(jw) zwischen Leistungsverstärkereingang 22 und Sensor 16 werden hinsichtlich Betrag abs(Gm(jw)) und Phase arg(Gm(jw)) aufgeteilt und somit die Kennlinien

```
                   1
     a(w)  =  ----------        cos(arg(Gm(jw)))
               abs(Gm(jw))

                                cos(phi(w))sin
                       -      --------------- (arg(Gm(jw)))
                                sin(phi(w))


              1              sin(arg(G(jw)))
     b(w)  = ----------     ---------------
             abs(Gm(jw))    sin(phi(w))


              1
     c(w)  = ---------- cos(phi(w) + arg(Gm(jw)))
             abs(Gm(jw))


                    1        cos(phi(w))
               -  ---------- ----------- sin(phi(w) + arg(Gm(jw)))
                  abs(G(jw)) sin(phi(w))


              1             sin(phi(w) + arg(G(jw)))
     d(w)  = ----------    -------------------------
             abs(Gm(jw))        sin(phi(w))
```

Der Wertebereich von w wird durch den Frequenzbereich der zu isolierenden Schwingung des Aggregates festgelegt.

Den Kennliniengliedern 4, 6, 8 und 10 wird das die Frequenz der Aggregatschwingungen charakterisierende Signal des Signalgenerators 3 zugeführt.

Die Ausgangssignale der Kennlinienglieder 4, 6, 8 und 10 werden mit a(w), b(w), c(w) und d(w) bezeichnet.

Dem Multiplikationsglied 5 wird das Signal $u_1(t)$ und a(w) zugeführt. Das Multiplikationsglied 7 bildet das Produkt von $u_2(t)$ und b(w). Die beiden so erhaltenen Produkte werden unter Verwendung des Summierers 12 addiert.

Das so erhaltene Signal $t_1(t)$ läßt sich durch

$$t_1(t) = a(w) \cdot u_1(t) + b(w) \cdot u_2(t)$$

$$= a(w) \cdot \sin wt + b(w) \cdot \sin(wt + phi)$$

$$= \frac{1}{abs(Gm(jw))} \sin(wt + arg(Gm(jw)))$$

beschreiben.

Entsprechend wird das Signal $t_2(t)$ unter Verwendung der Kennlinienglieder 8 und 10, der Multiplikatoren 9 und 11 sowie des Summierers 13 generiert.

$$t_2(t) = c(w) \cdot u_1(t) + d(w) \cdot u_2(t)$$

$$= c(w) \cdot \sin(wt) + d(w) \cdot \sin(wt + phi)$$

$$= \frac{1}{abs(Gm(jw))} \sin(wt + phi(w) + arg(Gm(jw)))$$

Das Signal $t_1(t)$ wird nun mit dem Ausgangssignal $s(t)$ des Signalgebers 16 unter Verwendung eines Multiplizierers 14 multipliziert. Ein weiterer Multiplizierer 15 bildet das Produkt von $t_2(t)$ und dem Ausgangssignal $s(t)$ des Signalgebers 16.

Unter Beachtung von

$\sin(x) \sin(y) = 0.5(\cos(x-y) - \cos(x+y))$
$G(jw) = Gm(jw)$

erhält man so:

```
s(t) t  (t)=
        1
      r (t)0.5(1 - cos(2wt + 2 arg(G(jw))) )
       1
    + r (t)0.5(cos(phi(w)) - cos(2wt + 2 arg(G(jw)) + phi(w)))
       2
      Z(t)0.5
    + ----------  cos(gamma(w) - arg(G(jw)))
      abs(g(jw))
                  - cos(2wt+gamma(w)+arg(G(jw)))
```

Ebenso gilt

```
s(t) t  (t) =
        2
      r (t) 0.5 (cos(-phi(w)) - cos(2wt + 2 arg(G(jw))) )
       1
    + r (t) 0.5 (1         - cos(2wt + 2 arg(G(jw)) + phi(w)) )
       2
       Z(t)0.5
    + ----------   cos(gamma(w) - phi(w) - arg(G(jw)))
      abs(g(jw))
                  - cos(2wt+gamma(w)+ arg(G(jw)))
```

Das Signal s(t)•$t_1$(t) wird dem Übertragungsglied 17, das Signal s(t)•$t_2$(t) dem Übertragungsglied 18 zugeführt.

Innerhalb dieser Übertragungsglieder wird die Amplitude $r_1$(t) bzw. $r_2$(t) berechnet. Wichtig ist, daß nur geringe Signalanteile mit der Frequenz 2w in den Ausgangssignalen der Übertragungsglieder enthalten sind. Dazu können in einem ersten Schritt diese Signalanteile mittels Tiefpaßfilter stark abgeschwächt werden. Nach einer solchen Tiefpaßfilterung können dann auf die so erhaltenen Signale bekannte Regelalgorithmen angewendet werden. Ebenso ist es möglich, zuerst einen solchen Regelalgorithmus auf $t_1$ und $t_2$ anzuwenden und anschließend eine Tiefpaßfilterung durchzuführen oder einen Regelalgorithmus anzuwenden, der selbst das gewünschte Tiefpaßverhalten aufweist. Die letztgenannte Bedingung kann u.U. von einem Regler, der nur einen Integralanteil aufweist, erfüllt werden. In der weiteren Funktionsbeschreibung wird zunächst eine Tiefpassfilterung durchgeführt und anschließend ein geeigneter Regelalgorithmus angewendet.

Die Eckfrequenz des Tiefpaßfilters wird so festgelegt, daß die harmonischen Signale mit der Frequenz von 2w stark abgeschwächt werden und somit in der weiteren Betrachtung vernachlässigt werden können, wobei die Eckfrequenz jedoch nicht zu niedrig festgelegt werden sollte, um eine gute Dynamik des Gesamtsystems zu erhalten.

$r_1$(t), $r_2$(t), Z(t) werden durch die Tiefpaßfilterung kaum beeinflußt, da sie relativ langsame Signale darstellen. Der Einfluß der Tiefpaßfilterung wird durch ' gekennzeichnet.

Nach Durchführung der Tiefpaßfilterung der Signale s(t) $t_1$(t) s(t) $t_2$(t) liegen die Signale

```
e (t) = 0.5.(r (t)'+r (t)' cos(phi(w))
 1             1      2

                Z(t)'
          + ----------- cos(gamma(w)- arg(G(jw))) )
            abs(G(jw)))
```

$$e_2(t) = 0.5(r_1(t)' \cos(-phi(w) + r_2')$$

$$+ \frac{Z(t)'}{abs(G(jw)))} \cos(gamma(w) - phi(w) - arg(G(jw)))\ )$$

vor.

Diese Gleichungen zeigen, daß die Reglereingangssignale $e_1(t)$, $e_2(t)$ jeweils von $r_1'$ und $r_2'$ abhängt. Man hat es somit mit gekoppelten Regelkreisen zu tun. Die Kopplung entfällt, wenn gilt: phi(w) = konst = 90°.

Diese Koppelung ist am stärksten ausgeprägt, wenn cos(phi(w)) große Werte annimmt, d.h. wenn phi(w) klein ist (bzw. in der Nähe von ganzzahligen Vielfachen von 180° liegt). Nähere Untersuchungen haben gezeigt, daß durch die Kopplungsterme die Dynamik des Gesamtsystems beeinflußt wird, die Funktion jedoch gewährleistet ist.

Die Herleitung der obigen Gleichungen wurde unter den Voraussetzungen gemacht, daß der gemessene Frequenzgang $G_m(jw)$ und der tatsächlich gegebene Frequenzgang G(jw) in guter Näherung übereinstimmen. Diese Voraussetzung läßt sich durch entsprechende Messungen erreichen. Zusätzlich wurde angenommen, daß Einschwingvorgänge vernachlässigt werden können.

Diese Voraussetzung wird in vielen Fällen dadurch erfüllt, daß die auftretenden Größen sich kontinuierlich verändern, d.h. daß sprungartige Änderungen in der Praxis nicht auftreten.

Eine nähere Betrachtung der obenstehenden Gleichungen zeigt, daß $e_1$ bei konstanter Frequenz direkt proportional zu $r_1$ bzw. $r_2$ ist. Die Beziehung zwischen $e_1$ und $r_1$ bzw. $r_2$ wird nur durch den Winkel phi(w) beeinflußt. Eine Abhängigkeit vom Frequenzgang G(jw) tritt in diesem Zusammenhang nicht auf. Entsprechendes gilt für die Beziehung zwischen $c_2$ und $r_1$ bzw. $r_2$.

Die Dynamik des Gesamtsystemes wird im wesentlichen bestimmt durch die Tiefpaßfilterung, den Regelalgorithmus, sowie der Phasendifferenz phi(w). Der Einfluß des Frequenzganges G(jw) auf die Dynamik des Gesamtsystems ist vernachlässigbar.

Der Zusammenhang zwischen den Signalen $e_1$ und $e_2$ und den Reglerausgängen $r_1$ und $r_2$ wird durch den Regelalgorithmus festgelegt. Im praktischen Versuch haben sich PI-Regler gemäß.

$$r_1(t) = k_p \cdot e_1(t) + \frac{kp}{T_I} \int_0^t e_1(t')\ dt',$$

$$r_2(t) = k_p \cdot e_2(t) + \frac{kp}{T_I} \int_0^t e_2(t')\ dt',$$

bewährt. Dabei ist
$k_p$ der Verstärkungsfaktor und
$T_I$ die Integrationszeitkonstante des Reglers.

Das dynamische Verhalten des Gummilagers, des Leistungsverstärkers, des Signalgebers 2 und des Trägers kann von Umgebungseinflüssen, wie beispielsweise der Temperatur, beeinflußt werden. Eine Berücksichtigung derartiger Einflüsse ist möglich, indem die Kennlinien zu Kennfeldern erweitert werden, wobei die das dynamische Verhalten beeinflussenden Größen, zusätzliche Eingangsgrößen der Kennfeldsteuerung darstellen. Diese zusätzlichen Eingangsgrößen werden unter Verwendung von Sensoren ermittelt und die so erhaltenen, zusätzlichen Eingangssignale den Kennfeldern zugeführt. Insbesondere an dem Gummilager und dem das Gummilager abstützenden Träger können derartige Signale erfaßt und damit die Auswirkungen auf das dynamische Verhalten dieser Bauelemente berücksichtigt werden. Das Übertragungsglied kann oberhalb einer willkürlich festzulegenden Eckfrequenz ein Tiefpaßverhalten aufweisen, wobei diese Eckfrequenz der Frequenz der zu unterdrückenden Schwingung des Motors kontinuierlich nachgeführt wird. Hierdurch ergibt sich eine weitere Verbesserung des dynamischen Verhaltens des Gesamtsystems.

Wenn es möglich ist, die Schwingungen des Motors vollständig oder teilweise durch die Kombination zweier oder mehrerer harmonischer Schwingungen zu beschreiben, kann die Schaltung derartig erweitert werden, daß sämtliche harmonischen Schwingungen isoliert werden. Dazu werden dem Signalgaber zusätzliche Signalgeneratoren nachgeschaltet. Jeder dieser Signalgenerator erzeugt zwei harmonische, in bezug aufeinander phasenverschobene, erste Signale, deren Frequenz mit einer Frequenz einer Schwingungskomponente der Aggregatschwingungen übereinstimmt. Zusätzlich erzeugt jeder Signalgenerator je ein zweites Signal, das die jeweils erzeugte Frequenz in charakterisierender Weise wiedergibt.

Jedem dieser Signalgeneratoren werden die Kennlinienglieder 4, 6, 8, 10, die Multiplizierer 5, 7, 9, 11, 14, 15, 19, 20, die Übertragungsglieder 17, 18, sowie die Summierer 12, 13 nachgeschaltet.

Jeder dieser Multiplizierer 14 und 15 wird signalleitend mit dem Sensor 16 verbunden.

Die Ausgangssignale der Multiplizierer 19 und 20 werden signalleitend mit zusätzlich eingefügten Eingängen des Summierers 21 verbunden.

Zusammenfassend bedeutet dies, daß bei gleichzeitiger Isolierung mehrere Schwingungskomponenten unterschiedlicher Frequenz die Schaltung entsprechend mehrfach aufgebaut wird, wobei der Sensor 16, der Summierer 21 sowie der Leistungsverstärker 22 von den so entstandenen Kreisen gemeinsam benutzt werden. Die Kennlinienglieder 4, 6, 8, 10 müssen den jeweils auftretenden Frequenzbereichen angepaßt werden, ebenso die Übertragungsglieder 17, 18.

**Patentansprüche**

1. Hydraulisch bedämpftes Gummilager (23) zur Abstützung eines in einer schwingenden Bewegung befindlichen Maschinenaggregats (1) auf einem Träger (24), bei dem einem flüssigkeitsgefüllten Arbeitsraum ein mit einem elektromagnetischen Antrieb versehener Aktuator zugeordnet ist, wobei der Antrieb mit einer Ansteuerung versehen ist, die mit einem ersten Signalgeber (2) des Aggregats (1) signalleitend verbunden ist und die einen Signalgenerator (3), eine Kennfeldsteuerung und einen Leistungsverstärker (22) als Endstufe umfaßt, dadurch gekennzeichnet, daß dem ersten Signalgeber (2) ein Signalgenerator (3) nachgeschaltet ist, der zwei harmonische, in bezug aufeinander phasenverschobene erste Signale

$$(u_{1_{(t)}},\ u_{2_{(t)}})$$

einer miteinander und mit den Schwingungen des Maschinenaggregates (1) übereinstimmenden Frequenz erzeugt sowie ein zweites Signal, das diese Frequenz in charakterisierender Weise wiedergibt, daß dieses zweite Signal Kennliniengliedern (4, 6, 8, 10), deren funktionaler Zusammenhang zwischen Eingangs- und Ausgangssignal willkürlich festgelegt ist, zugeführt wird, daß die Ausgangssignale (a(w), b(w), c(w), d(w)) dieser Kennlinienglieder (4, 6, 8, 10) mit den ersten Signalen

$$(u_{1_{(t)}},\ u_{2_{(t)}})$$

des Signalgenerators (3) multipliziert und die so erhaltenen dritten Signale paarweise addiert werden, daß die so erhaltenen Signale ($t_1(t)$, $t_2(t)$) jeweils mit einem von einem zweiten Signalgeber (16) erzeugten vierten Signal (s(t)), welcher die Relativbewegungen des Trägers (24) in charakteristischer Weise wiedergibt, multipliziert werden, daß die beiden so erhaltenen fünften Signale jeweils einem willkürlich festgelegten Übertragungsglied (17, 18) zugeführt werden, das oberhalb einer willkürlich festlegbaren Frequenz ein Tiefpaßverhalten aufweist, daß die so erhaltenen sechsten Signale ($r_1(t)$, $r_2(t)$) jeweils mit den ersten Signalen

EP 0 498 926 B1

$$(u_{1_{(t)}}, \quad u_{2_{(t)}})$$

des Signalgenerators (3) multipliziert werden und daß die so erhaltenen siebten Signale $(v_1(t), v_2(t))$ miteinander zu einem achten Signal addiert werden, das in dem Leistungsverstärker (22) verstärkt und zur Betätigung des Antriebes verwendet wird.

2. Gummilager nach Anspruch 1, dadurch gekennzeichnet, daß mindestens einem der Sensoren ein Analog-Digitalwandler nachgeschaltet und dem Leistungsverstärker ein Digital-Analogwandler vorgeschaltet ist.

3. Gummilager nach Anspruch 1 bis 2, dadurch gekennzeichnet, daß die beiden vom Signalgenerator erzeugten, harmonischen Signale um einen von der Schwingungsfrequenz des Maschinenaggregates abhängigen Winkel phasenverschoben sind.

4. Gummilager nach Anspruch 1 bis 3, dadurch gekennzeichnet, daß dem ersten Signalgeber weitere Signalgeneratoren nachgeschaltet werden, wobei jeder dieser Signalgeneratoren je zwei in bezug aufeinander phasenverschobene erste Signale erzeugt, deren Frequenz mit einer Frequenz einer Schwingungskomponente der Aggregatschwingungen übereinstimmt, sowie je ein zweites Signal, das diese Frequenz in charakterisierender Weise wiedergibt, daß diese Signale weiteren Kennliniengliedern zugeführt werden, daß die Ausgangssignale dieser zusätzlichen Kennlinienglieder mit den zusätzlichen ersten Signalen des Signalgenerators multipliziert und die so erhaltenen zusätzlichen dritten Signale paarweise addiert werden, daß die so erhaltenen zusätzlichen Signale jeweils mit dem vom zweiten Signalgeber erzeugten vierten Signal multipliziert werden, daß die so erhaltenen zusätzlichen fünften Signale weiteren willkürlich festgelegten Übertragungsgliedern zugeführt werden, die oberhalb einer willkürlich festgelegten Frequenz ein Tiefpaßverhalten aufweisen, daß die so erhaltenen zusätzlichen sechsten Signale jeweils mit den zusätzlichen ersten Signalen des Signalgenerators multipliziert werden und daß die so erhaltenen zusätzlichen siebten Signale zu dem bereits gebildeten achten Signal addiert und im Leistungsverstärker verstärkt und zur Betätigung des Antriebes verwendet werden.

**Claims**

1. A hydraulically damped rubber mounting (23) for supporting a machine set (1), which is moving in an oscillating manner, on a support (24), in the case of which a liquid-filled operating space is assigned an actuator, which is provided with an electromagnetic drive, the drive being provided with a controller which is connected to a first signal transmitter (2) of the set (1) such that signals are passed and comprises a signal generator (3), a characteristic-data controller and a power amplifier (22) as the output stage, characterized in that a signal generator (3) is connected downstream of the first signal transmitter (2), which signal generator (3) produces two harmonic, first signals

$$(u_{1_{(t)}}, \quad u_{2_{(t)}}),$$

which are phase-shifted with respect to one another, at a frequency such that they correspond with one another and correspond with the oscillations of the machine set (1), as well as a second signal which reproduces this frequency in a characterizing manner, in that this second signal is supplied to characteristic-line elements (4, 6, 8, 10) whose functional relationship between the input signal and output signal is defined arbitrarily, in that the output signals (a(w), b(w), c(w), d(w)) of these characteristic-line elements (4, 6, 8, 10) are multiplied by the first signals

$$(u_{1_{(t)}}, \quad u_{2_{(t)}})$$

of the signal generator (3) and the third signals which are thus obtained are added in pairs such that the signals $(t_1(t), t_2(t))$ thus obtained are in each case multiplied by a fourth signal $(s(t))$ which is produced by a second signal transmitter (16) and reproduces the relative movements of the support (24) in a characteristic manner, in that the two fifth signals thus obtained are in each case supplied to a

11

EP 0 498 926 B1

transmission element (17, 18), which is defined arbitrarily and has a low-pass response above a frequency which can be defined arbitrarily, in that the sixth signals ($r_1(t)$, $r_2(t)$) thus obtained are in each case multiplied by the first signals

$$(u_{1_{(t)}}, u_{2_{(t)}})$$

of the signal generator (3), and in that the seventh signals ($v_1(t)$, $v_2(t)$) thus obtained are added to one another to form an eighth signal which is amplified in the power amplifier (22) and is used to operate the drive.

2. A rubber mounting according to claim 1, characterized in that an analog/digital converter is connected downstream of at least one of the sensors, and a digital/analog converter is connected upstream of the power amplifier.

3. A rubber mounting according to either of claims 1 and 2, characterized in that the two harmonic signals produced by the signal generator are phase-shifted through an angle which is dependent on the oscillation frequency of the machine set.

4. A rubber mounting according to any of claims 1 to 3, characterized in that further signal generators are connected downstream of the first signal transmitter, each of these signal generators producing in each case two first signals which are phase-shifted with respect to one another and whose frequency coincides with a frequency of an oscillation component of the set oscillations, as well as in each case one second signal which reproduces this frequency in a characterizing manner, in that these signals are supplied to further characteristic elements, in that the output signals of these additional characteristic elements are multiplied by the additional first signals of the signal generator, and the additional third signals thus obtained are added in pairs such that the additional signals thus obtained are in each case multiplied by the fourth signal produced by the second signal transmitter, in that the additional fifth signals thus obtained are supplied to further transmission elements, which are defined arbitrarily and have a low-pass response above a frequency which is defined arbitrarily, in that the additional sixth signals thus obtained are in each case multiplied by the additional first signals of the signal generator, and in that the additional seventh signals thus obtained are added to the already formed eighth signal and are amplified in the power amplifier and used to operate the drive.

**Revendications**

1. Support en caoutchouc (23) amorti hydrauliquement servant au montage d'un groupe moteur (1) se trouvant en mouvement oscillatoire sur un socle (24), avec lequel un actuateur à entraînement électro-magnétique coopère avec un espace de travail rempli de liquide, l'entraînement étant pourvu d'une commande qui est reliée, par une ligne acheminant les signaux, à un premier émetteur (2) de signaux du groupe moteur (1) et qui comprend un générateur (3) de signaux, une définition des réseaux de caractéristiques et, en sortie, un amplificateur de puissance (22), ce support en caoutchouc étant caractérisé en ce qu'un générateur (3) de signaux est branché derrière le premier émetteur (2) de signaux, lequel générateur de signaux produit deux premiers signaux ($u_1(t)$, $u_2(t)$) harmoniques déphasés l'un par rapport à l'autre et dont les fréquences coïncident entre elles et avec les oscillations du groupe moteur (1), ainsi qu'un deuxième signal qui reproduit cette fréquence de manière caractéristique; en ce que ce deuxième signal est acheminé vers des traceurs (4, 6, 8, 10) de courbes caractéristiques dont on établit arbitrairement la corrélation fonctionnelle entre signal d'entrée et de sortie; en ce que les signaux de sortie ($a(w)$, $b(w)$, $c(w)$, $d(w)$) de ces traceurs (4, 6, 8, 10) de courbes caractéristiques sont multipliés avec les premiers signaux ($u_1(t)$, $u_2(t)$) du générateur (3) de signaux et que les troisièmes signaux ainsi obtenus sont additionnés deux à deux; en ce que les signaux ($t_1(t)$, $t_2(t)$) ainsi obtenus sont multipliés chacun avec un quatrième signal ($s(t)$) qui est produit par un deuxième émetteur (16) de signaux et qui reproduit de manière caractéristique les mouvements relatifs du socle (24); en ce que les cinquièmes signaux ainsi obtenus, au nombre de deux, sont acheminés chacun vers un organe de transmission (17, 18) respectif, a déterminer arbitrairement et se comportant, au dessus d'une fréquence que l'on peut fixer arbitrairement, comme un filtre passe-bas; en ce que les sixièmes signaux ($r_1(t)$, $r_2(t)$) ainsi obtenus sont multipliés chacun, respectivement, avec les premiers signaux ($u_1(t)$, $u_2(t)$) du générateur (3) de signaux; et en ce que les septièmes signaux ($v_1(t)$, $v_2(t)$) ainsi obtenus

12

sont additionnés l'un à l'autre pour donner un huitième signal qui est amplifié dans l'amplificateur de puissance (22) et utilisé pour actionner la commande.

2. Support en caoutchouc selon la revendication 1, caractérisé en ce qu'un convertisseur analogique-numérique est branché derrière au moins un des capteurs et qu'un convertisseur numérique-analogique est branché devant l'amplificateur de puissance.

3. Support en caoutchouc selon les revendications 1 à 2, caractérisé en ce que les deux signaux harmoniques produits par le générateur de signaux sont déphasés selon un angle qui est fonction de la fréquence des oscillations du groupe moteur.

4. Support en caoutchouc selon les revendications 1 à 3, caractérisé en ce que des générateurs de signaux additionnels sont branchés derrière le premier émetteur de signaux, ces générateurs de signaux produisant, chacun, deux premiers signaux déphasés l'un par rapport à l'autre et dont la fréquence coïncide avec la fréquence d'une composante vibratoire des oscillations du groupe moteur, et produisant, chacun, un deuxième signal qui reproduit cette fréquence de manière caractéristique; en ce que ces signaux sont acheminés vers des traceurs de courbes caractéristiques additionnels; en ce que les signaux de sortie de ces traceurs de courbes caractéristiques additionnels sont multipliés avec les premiers signaux supplémentaires du générateur de signaux et que les troisièmes signaux supplémentaires ainsi obtenus sont additionnés deux à deux; en ce que les signaux supplémentaires ainsi obtenus sont multipliés, chacun respectivement, avec le quatrième signal généré par le deuxième émetteur de signaux; en ce que les cinquièmes signaux supplémentaires ainsi obtenus sont acheminés vers des organes de transmission additionnels arbitrairement choisis, lesquels se comportent, au-dessus d'une fréquence définie arbitrairement, comme des filtres passe-bas; en ce que les sixièmes signaux supplémentaires sont multipliés, respectivement, avec les premiers signaux supplémentaires du générateur de signaux; et en ce que les septièmes signaux supplémentaires ainsi obtenus sont additionnés au huitième signal déjà formé, amplifiés dans l'amplificateur de puissance, et utilisés pour l'actionnement de la commande.